# EUROPEAN PATENT APPLICATION

(11) **EP 4 556 293 A1**
(43) Date of publication of application: **21.05.2025**
(21) Application number: 24156443.4
(22) Date of filing: 07.02.2024
(51) Int. Cl.: B60L 8/00

(54) **SELF-CHARGING SYSTEM FOR VEHICLES WHILE DRIVING USING WIND TURBINES**

(30) Priority: 17.11.2023 GB 202317675
(71) Applicant: Sawin, Mako, Manchester Lancashire M20 5PJ (GB)
(72) Inventor: Sawin, Mako, Manchester Lancashire M20 5PJ (GB)

(57) **Abstract**

This patent application presents a groundbreaking self-charging wind-powered vehicle system designed for a wide range of transportation modes, including cars, lorries, trains, trams, and airplanes. The core innovation involves the integration of advanced wind turbines into these vehicles, enabling the capture of kinetic energy from the environment and its conversion into electrical power. This sustainable energy source offers a compelling solution to reduce carbon emissions, minimize reliance on fossil fuels, and deliver cost-effective and environmentally friendly transportation.

Traditional transportation systems primarily rely on fossil fuels, resulting in environmental pollution and the depletion of finite resources. In contrast, the proposed self-charging wind-powered vehicle system addresses these challenges by harnessing the power of the wind efficiently.

## Description

### Background

The global pursuit of sustainable and eco-friendly solutions in transportation has spurred remarkable advancements in power generation systems. Among these innovations stands the development of a self-charging wind-powered vehicle system, a groundbreaking solution that promises to revolutionize how vehicles are powered and reduce their environmental impact. This patent application embarks on a journey to explore, describe, and protect this innovative technology.

The evolution of transportation has always been intertwined with advancements in power generation. From steam engines to internal combustion engines and electric motors, the search for efficient, environmentally responsible solutions has been a constant driver of innovation. In recent times, the imperative to reduce carbon emissions and dependence on fossil fuels has inspired a fresh wave of creative thinking.

One of the most promising innovations to emerge from this effort is the self-charging wind-powered vehicle system. This transformative approach seeks to harness the kinetic energy of the wind to power an array of vehicles, including cars, lorries, trains, trams, and airplanes, while simultaneously reducing the carbon footprint of transportation. The system's uniqueness lies not only in its renewable energy source but also in its adaptability to diverse vehicle types and layouts.

This patent application delves into the intricate details of this system, exploring its various layout configurations, highlighting its key features and advantages, and elucidating its potential to reshape the future of transportation. With a focus on intellectual property protection and sustainable innovation, we aim to secure a cleaner and greener future for the transportation industry.

In this patent application, we introduce a groundbreaking self-charging wind-powered vehicle system designed to harness wind energy for a wide range of transportation modes, including cars, lorries, trains, trams, airplanes, and drones. This innovative system represents a significant step forward in our commitment to revolutionize sustainable transportation and address the pressing challenges of our time.

**Environmental Impact and Sustainability:** One of the primary goals of our self-charging wind-powered vehicle system is to minimize the environmental impact of transportation. Traditional modes of transportation primarily rely on fossil fuels, contributing significantly to greenhouse gas emissions, air pollution, and the depletion of non-renewable resources. Our system offers an eco-friendly alternative by harnessing wind power-a clean and renewable energy source-to generate electricity for various vehicles.

By integrating wind turbines into these vehicles, we reduce their reliance on fossil fuels and decrease carbon emissions, contributing to a greener and healthier planet. The use of wind power is inherently sustainable, as it depends on a resource that is abundant and inexhaustible. As a result, our system aligns with global efforts to combat climate change and transition towards a more sustainable and low-carbon future.

**Cost Reduction and Economic Benefits:** Beyond its environmental advantages, our self-charging wind-powered vehicle system offers substantial cost-saving benefits. The transportation industry is a significant consumer of energy, and the rising costs of fossil fuels pose economic challenges for both individuals and businesses. By utilizing wind power as an alternative energy source, our system helps reduce the financial burden associated with fuel consumption.

The cost savings extend to various aspects of transportation, including fuel expenses, maintenance, and operational costs. Electric vehicles powered by our system require less frequent refueling and maintenance, resulting in long-term economic advantages for vehicle owners and operators. Additionally, by generating electricity onboard, our system minimizes the need for external charging infrastructure, further streamlining transportation costs.

**Annual Energy Consumption for Different Modes of Transportation:** Understanding the energy consumption of various modes of transportation is essential for assessing their environmental impact and cost implications. To provide insights into this aspect, we present approximate annual energy consumption figures for different transportation modes:
**Trains and Trams:**
   In the UK, the total electricity consumption for railways amounts to approximately 440,000,000 kWh (440 GWh). In 2022 alone, a staggering 717.5 million passengers utilized light rail trams, with each passenger trip consuming 0.05 kWh per kilometer.
**Airplanes:**
   For airlines, the fuel bill accounts for a significant portion of operating expenses, estimated to reach USD 215 billion, or around 28% of total expenses in the current year. This cost includes fuel expenses, which are a crucial component of airline operations. In 2022, fuel expenses accounted for almost 30% of operating expenses.
   These figures provide a general overview of the energy consumption for different transportation modes.

### Summary of the Invention:

This patent application introduces a groundbreaking self-charging wind-powered vehicle system poised to revolutionize the transportation industry. By strategically integrating wind turbines into cars, lorries, trains, trams, airplanes, and drones, our invention addresses pressing environmental concerns while delivering substantial cost savings. Our unwavering commitment to sustainability, combined with the potential for significant reductions in carbon emissions and fuel costs, positions our invention as a game-changer in the realm of transportation. The self-charging wind-powered vehicle system aligns seamlessly with global initiatives aimed at mitigating climate change, enhancing air quality, and promoting economic sustainability. As we envision a future marked by the imperative of sustainable transportation, our patented system stands at the forefront of innovation. We foresee a world where vehicles effortlessly incorporate wind power into their operations, ushering in an era of cleaner, more efficient, and cost-effective transportation for generations to come. In conclusion, our patent represents not only a technological advancement but also a pathway to a more sustainable and prosperous future-a future in which transportation contributes to the well-being of our planet and its inhabitants. We extend an invitation to join us on this transformative journey toward a greener and more sustainable world. Together, we can drive change and leave a lasting impact. To demonstrate the functionality of this innovation, we conducted an experiment using a prototype installed in a car. This presentation covers three experiments conducted with cars. **Top Layout Experiment:** The experiment utilized the top layout configuration, incorporating 12 wind turbines branded as Walfron. Each turbine had a power output of 300 watts at 24 volts. In total, this configuration generated 3.6 kilowatts of power at 288 volts, surpassing the capacity of standard slow charge connectors, specifically 3-pin 3-kilowatt AC connectors. The turbines were designed to operate effectively at a wind speed of 5 meters per second. Consequently, when the car was traveling at a speed of 12 miles per hour (mph), the experiment yielded outstanding results. The vehicle's speed was not increased during testing to safeguard the turbines. These findings indicate that by incorporating more efficient turbines, we can generate higher kilowatt outputs to accommodate greater speeds.
A) **Channels Layout Experiment:** In a parallel experiment using the channels layout configuration, the same turbines were utilized, producing results similar to the top layout configuration.

These experiments highlight the potential for maximizing power generation and vehicle speed through the implementation of more efficient wind turbines in our innovative self-charging wind-powered vehicle system.
B) **Beneath Layout Experiment:** For the beneath layout experiment, we employed the Atlax x7 generator, boasting a remarkable 7-kilowatt capacity. However, due to the challenges associated with installing this generator beneath the car and the lack of assistance, an alternative approach was adopted. The generator was mounted on the roof of the car, following the same fundamental principles of the beneath layout configuration. During the experiment, the car reached a speed of 33 miles per hour (mph) and successfully generated 7 kilowatts (kW) of power. This result offers a promising outlook, demonstrating that with the implementation of improved and dual-turbine systems operating at higher speeds, we can achieve rapid supercharging capabilities, significantly enhancing the efficiency of our self-charging wind-powered vehicle system.

In the context of electric trains and trams, determining the precise electricity requirements without access to detailed information about the specific train and its operational parameters presents a significant challenge. Electric train systems are meticulously designed for energy efficiency, with optimizations tailored to their particular routes and intended functions. The amount of electricity necessary to power a train depends on a multitude of variables, encompassing the train's classification, physical dimensions, propulsion system, travel distance, and velocity.

### Key Features:

The self-charging wind-powered vehicle system boasts a multitude of key features that distinguish it as a game-changing innovation in transportation:
- Wind Turbine Integration: The heart of the system lies in the seamless integration of wind turbines into vehicles, enabling the efficient capture of kinetic energy from the wind.
- Adaptability to Vehicle Types: The system's versatility ensures that it can be tailored to various modes of transportation, accommodating the unique shapes and operational requirements of cars, lorries, trains, trams, and airplanes.
- Environmental Sustainability: By harnessing wind power, our system significantly reduces carbon emissions, positioning it as an environmentally responsible alternative to traditional fuel-powered vehicles.
- Cost-Effectiveness: With long-term financial benefits for vehicle owners and operators, our self-charging system proves to be cost-effective, ultimately reducing operational expenses.
- Safety Mechanisms: Innovative safety features, such as turbine protection during bumps or obstacles, guarantee the durability and reliability of the system.
- Energy Storage: The system includes advanced energy storage solutions to ensure a continuous power supply, even in low-wind conditions, enhancing its practicality and reliability.

These key features collectively illustrate the novelty, innovation, and potential impact of our self-charging wind-powered vehicle system on the future of transportation. They form the foundation of our patent application, protecting the intellectual property behind this groundbreaking technology.

To harness the full potential of wind energy in diverse modes of transportation, our self-charging wind-powered vehicle system offers three distinct layout configurations tailored to specific needs and constraints. These configurations, comprising 'Beneath the Vehicle,' 'On Top of the Vehicle,' and 'Within Channels (Containing Generators),' have been meticulously engineered to provide optimized energy generation while seamlessly integrating with various vehicle types.

In the "Description of the patent," the detailed exposition introduces a thorough examination of each layout configuration and their applications across diverse vehicle types. This in-depth discussion establishes a foundational understanding of the innovative turbine layouts incorporated into the system, accentuating their defining characteristics and the advantages that position this technology as a paradigm shift in sustainable transportation.

### Brief of Description of Drawing

Figure 1: Beneath Layout with Duale Wind Turbines configuration positions wind turbines underneath the vehicle, typically beneath the chassis or body.
Figure 2: In the 'On Top of the Vehicle' configuration, wind turbines are securely mounted on the top surface of the vehicle.
Figure 3 and 4: The 'Within Channels (Containing Generators)' configuration encapsulates wind turbines within specialized channels that also house four to twelve generators.
Figure 5: The channels layout for cars involves positioning six wind turbines horizontally alongside the wheels.
Figure 6: The channels layout for cars involves positioning six to twelve wind turbines horizontally alongside the wheels, spanning from the front to the rear of the car.
Figure 7 and 8: Beneath and Channel Layouts: for Lorries and big trucks in a different angle, they are ideally suited for the beneath and channel layout configurations.
Figure 9: Beneath and Channel Layouts: for Lorries and big trucks, with three dual wind turbines and six channels.
Figure 10 and 11: The roof layout configuration is the most suitable choice for trains, with several dual turbines and channels.
Figure 12: Depicts a battery storage system for trains and trams.
Figure 13 and 14: Beneath Layout for airplanes in different angles.
Figure 15: Double Layout Overlapped During Normal Speed.
Figure 16: Double Layers Partially Covered.

### Introduction to the Detailed Description

In this section, we provide a comprehensive and detailed exploration of each layout configuration within our self-charging wind-powered vehicle system. Each layout has been meticulously engineered to harness wind energy efficiently and is tailored to the unique requirements of various modes of transportation, including cars, lorries, trains, trams, and airplanes. Our aim is to offer a comprehensive understanding of the innovative wind turbine layouts employed in the system, highlighting their key features and advantages, and showcasing their potential to revolutionize sustainable transportation. Let us delve into the intricacies of each configuration and their applications in different vehicle types.

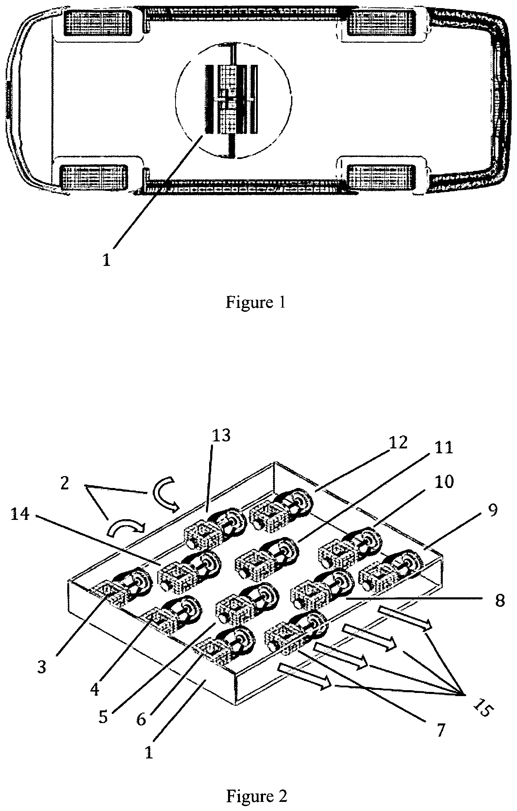

**In** **Figure 1****,** the 'Beneath the Vehicle' Configuration showcases the innovative design of the self-charging wind-powered vehicle system. This configuration maximizes the use of the expansive underside of the vehicle to efficiently harness the kinetic energy of the wind.

The key component of this configuration is represented by number 1, which signifies the presence of dual wind turbines. These turbines are strategically positioned beneath the vehicle, taking full advantage of the available space to capture wind energy effectively.

It not only ensures unobstructed airflow for the turbines but also contributes to an aesthetically sleek and streamlined appearance. Innovative sensor technology plays a crucial role in this configuration, enabling the swift lifting of the turbines in a fraction of a second when approaching road irregularities or bumps, thus safeguarding the integrity of the blades.

This configuration proves especially advantageous during highway driving, offering supercharging capabilities for the vehicle. Equipped with advanced sensor technology, the generator rapidly lifts within a fraction of a second when encountering road irregularities or bumps, ensuring the protection of the turbine blades. The 'Beneath the Vehicle' layout configuration proves to be highly adaptable for use during fast drives on straight roads, allowing for the utilization of either a single or dual turbine setup.

**In** **Figure 2****,** illustrates the 'Top Layout' Configuration, which offers a seamless integration of wind turbines onto the roof of existing electric cars. This innovative design requires only minor modifications by manufacturers to accommodate the wind power generation system.

Number 1 represents the body of the 'Top Layout' configuration, showcasing the carefully integrated wind turbine assembly. The wind turbines are strategically positioned on the roof of the car, making efficient use of the available space. The "Top Layout" configuration represents a cutting-edge integration of wind turbines onto the roof of electric cars, designed for maximum energy capture and minimal disruption to the vehicle's aesthetics. This layout typically consists of a bank of 12 wind turbines, although the number can vary based on specific vehicle designs and energy requirements.

Number 2 signifies the airflow path designed to channel the incoming wind towards the wind turbines. This airflow, denoted by numbers three to fourteen, plays a crucial role in powering the twelve wind turbines efficiently. Number 15 represents the existing airflows around the vehicle. These natural airflows are harnessed to maximize the generation of wind energy, contributing to the system's effectiveness.

For entirely new car designs, the choice of layout is guided by the vehicle's shape and customer preferences. Some customers may favor a sleeker appearance without the top turbine, opting instead for either the beneath or channels layouts.

The turbines employed in this configuration are based on prototype models, each measuring 30 centimeters in length, with a compact body measuring 15 centimeters and blades extending to a length of 15 centimeters. These turbines have been meticulously engineered to strike a balance between efficiency and space utilization. It's important to note that this prototype was developed using available turbines in the market.

However, as part of the adaptability and innovation of this system, manufacturers have the capability to produce smaller, yet highly efficient turbines specifically tailored to the needs of this layout. These smaller turbines can generate a substantial amount of kilowatt-hours (kWh), ensuring that energy generation meets the demands of electric vehicles. The arrangement of these turbines is carefully designed to optimize wind energy capture. They are strategically positioned on a rectangular box, measuring 130 centimeters in length, 106 centimeters in width, and 17 centimeters in height. This rectangular box features open fronts and backs, facilitating unobstructed wind flow into the turbines.

The design not only prioritizes energy generation efficiency but also maintains a sleek and aerodynamic appearance, ensuring that the vehicle's performance and aesthetics remain harmonious. The combination of these factors makes the "Top Layout" an attractive choice for electric cars, both in terms of energy sustainability and visual appeal. It exemplifies our commitment to seamlessly integrating sustainable energy solutions into existing vehicle designs, paving the way for a greener future of transportation.

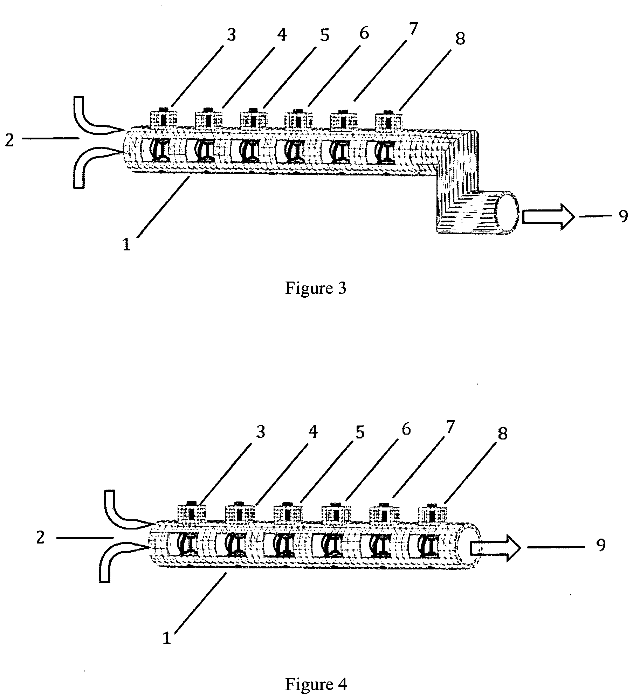

**In** **Figure 3****,** Channels Layout for Cars, with the main body of channels (1) ending in an elbow where airflow (2) interacts with wind turbines numbered from three to eight. The exit point for the wind is indicated as 'night' (3).

This L-shaped configuration is particularly suitable for cars equipped with only two channels, each housing six generators. The airflow exits at the center of the car, optimizing wind turbine efficiency.

**In** **Figure 4****,** Channels Layout for Cars, with the main body of channels (1) ending in a straight section where airflow (2) interacts with wind turbines numbered from three to eight. The exit point for the wind is indicated as 'night' (9). This straight-shaped configuration is particularly suitable for cars equipped with only two channels, each housing six to twelve generators. The airflow exits at the end of the car, optimizing wind turbine efficiency.

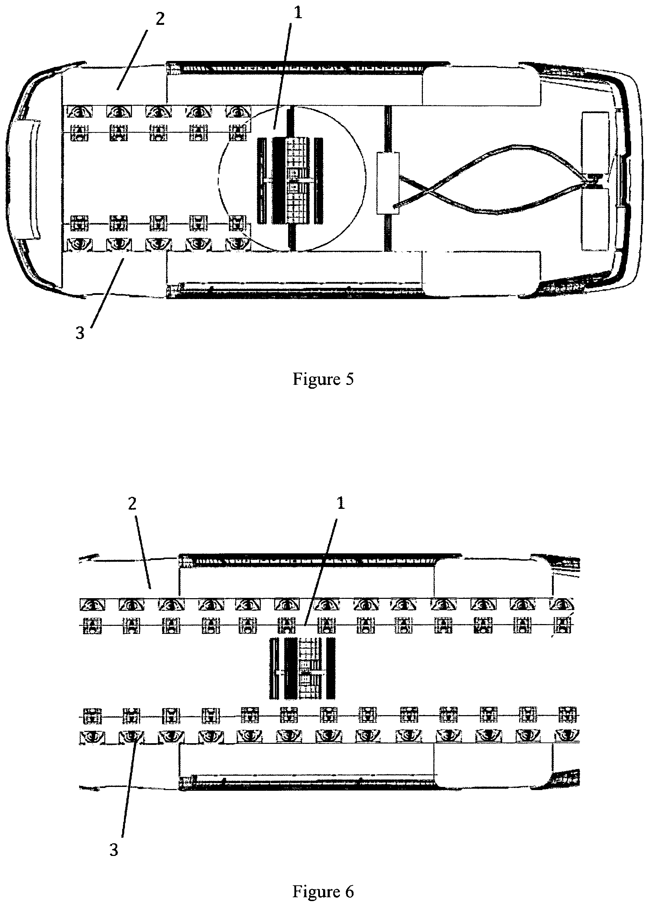

**In** **Figure 5****,** the dual wind turbine generator (1) is applied with two channels as described in Figure 3 (2 and 3). The channels layout for cars involves positioning wind turbines horizontally alongside the wheels. It features a protective cover that spans from the start to the end of the channels. This cover can be conveniently opened when the vehicle requires charging, offering an intuitive and user-friendly experience for car owners.

These layout configurations exemplify the adaptability of our self-charging wind-powered vehicle system, catering to the diverse needs and preferences of car owners while enhancing energy efficiency and reducing environmental impact.

The Channels layout lies horizontally alongside the wheels and features a cover spanning from start to end. This cover can be opened when the vehicle requires charging.

**In** **Figure 6****,** The dual wind turbine generator (1) is applied with two channels as described in Figure 4 (2 and 3). This configuration can accommodate up to 24 turbines, and with dual turbines, it can achieve high kilowatt production.

This layout offers a compact and space-efficient solution for energy generation. The channels are designed to lie horizontally alongside the vehicle's wheels, featuring a protective cover that spans from start to end. This cover can be swiftly opened when the vehicle requires charging, ensuring a seamless and user-friendly experience. This configuration is particularly advantageous for vehicles where the top and beneath layouts are impractical due to constraints such as shape and available space.

These innovative layout configurations underscore the adaptability and versatility of our self-charging wind-powered vehicle system, catering to a wide range of transportation modes while addressing the unique challenges and opportunities presented by each. The following sections provide a detailed exploration of each layout's application in various vehicle types, showcasing the system's flexibility and efficacy in revolutionizing sustainable transportation.

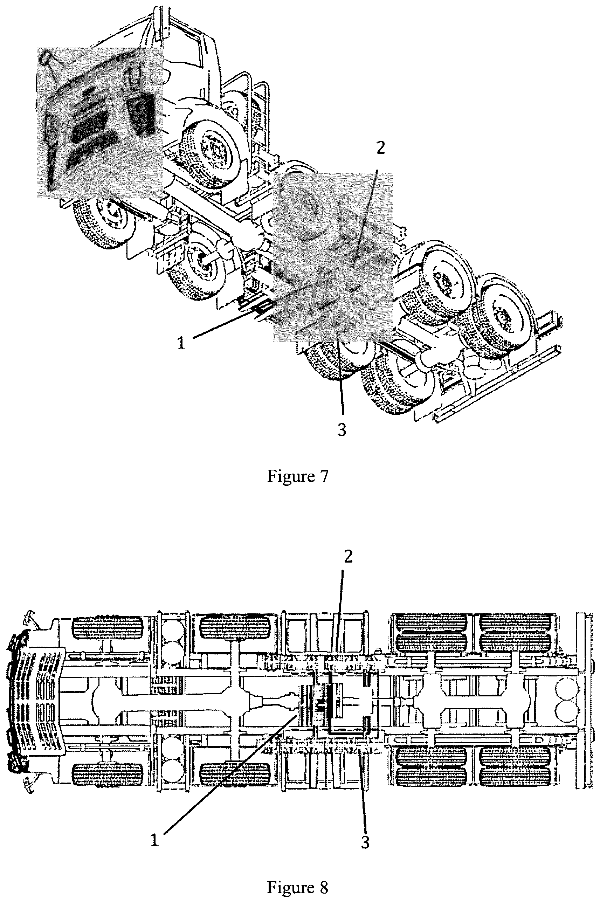

**In** **Figures 7 and 8****,** large lorries and trucks, as shown in the images, are equipped with a dual wind turbine (1) and two channels (2, 3). These substantial vehicles provide a unique opportunity for harnessing wind power, given their size and distinct operational characteristics. Beneath and Tube Layouts: Lorries and big trucks are ideally suited for the beneath and tube layout configurations. The beneath layout involves positioning wind turbines beneath the chassis or body of the vehicle, taking full advantage of the available space and minimizing interference with the vehicle's operational aspects. The tube layout, on the other hand, features turbines enclosed within channels, providing ample room for multiple turbines. These configurations align seamlessly with the operational requirements of lorries and trucks, enhancing their energy efficiency.

Limitations of the Top Layout: Unlike some other vehicle types, the top layout is typically not feasible for lorries and big trucks. The available roof space on these vehicles may be insufficient to accommodate wind turbines effectively. Moreover, the operational routes of lorries often involve track changes and potential obstacles that limit the utilization of the top area. Therefore, lorries primarily benefit from the beneath and tube configurations, which are both well-suited to their operational needs, as depicted.

The integration of wind power into lorries and big trucks represents a significant step forward in sustainable transportation. By customizing the turbine layout configurations to their unique design and operational characteristics, we maximize energy generation while ensuring the seamless functionality of these heavy-duty vehicles on the road. For lorries and trucks, the option to increase the number of wind turbines in channels or have several beneath dual wind turbines is available.

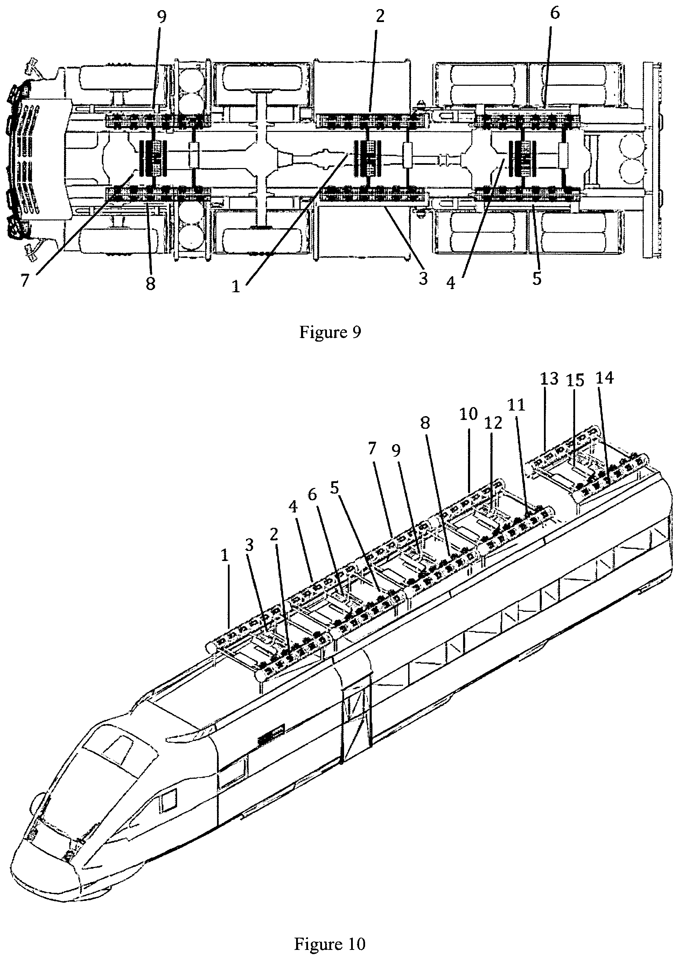

**In** **Figure 9****,** due to the extended length of lorries and trucks, our system employs the Turbine Layout Configurations, offering the flexibility to integrate multiple turbines beneath the vehicle or within channels. We apply three dual turbines (1, 4, 7) and six channels (2, 3, 5, 6, 8, and 9). This adaptability facilitates the installation of more than one turbine beneath a single lorry or up to six turbines within dedicated channels, resulting in a substantial increase in energy generation capacity.

**In** **Figure 10****,** the roof layout configuration is the most suitable choice for trains as it can accommodate multiple channels and dual turbines, as shown with dual turbines (3, 6, 9, 12, and 15) and channels (1, 2, 4, 5, 7, 8, 10, 11, 13 and 14).

Due to space constraints and track/terrain limitations beneath trains and trams, the beneath layout for turbine blades is impractical. Consequently, the roof layout stands as the optimal choice, effectively utilizing available space and harnessing wind power for these modes of transportation. Trains and trams are pivotal in urban and long-distance transit, and integrating wind power into their operation marks a significant stride toward sustainability. This section delves into how the self-charging wind-powered system is customized to suit the unique requirements of trains and trams.

The Roof Layout configuration offers distinct advantages for trains and trams. It provides efficient energy generation without interfering with the vehicle's tracks or infrastructure. This layout maximizes the utilization of roof space, optimizing wind energy capture for powering the vehicle. It seamlessly integrates with both existing and new train and tram designs, ensuring compatibility and ease of implementation.

While the roof layout is the preferred choice for current trains and trams, it's essential to consider the channel layout for innovative design concepts. This configuration encompasses turbines enclosed within channels, enabling a streamlined and integrated design. For pioneering train and tram designs, the channel layout presents a viable option, offering flexibility in turbine placement.

The incorporation of wind power into trains and trams via the roof layout configuration, coupled with the introduction of a battery storage compartment, exemplifies our dedication to transforming sustainable transportation. These tailored solutions facilitate efficient energy generation and uninterrupted operation, further contributing to a greener and more environmentally friendly future for public transportation.

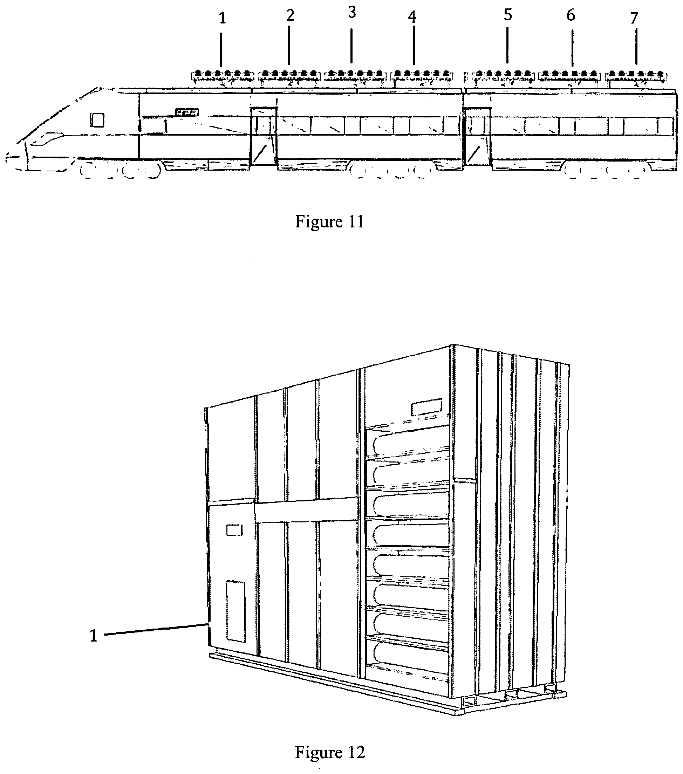

**In** **Figure 11****,** the roof layout configuration for trains or trams is shown from a different angle, with channels and dual turbines numbered from 1 to 7.

**In** **Figure 12****,** Battery Storage Compartment (1) a pivotal aspect of optimizing the wind-powered system for electric trams and trains is the incorporation of a specialized battery storage compartment. This compartment has been thoughtfully designed to serve as a dedicated space for housing energy storage solutions, primarily batteries. Its strategic placement within the vehicle's structure allows it to effectively capture and store excess energy generated by the wind turbines.

One of the key benefits of this battery storage compartment is its ability to address the intermittency of wind energy production. Wind energy generation is inherently variable, depending on weather conditions and other factors. During periods of strong winds or high wind efficiency, the wind turbines generate surplus electricity beyond the immediate needs of the vehicle. Instead of letting this excess energy go to waste, it is intelligently directed into the storage compartment, where it is stored efficiently in batteries.

This stored energy becomes a valuable resource for the electric tram or train. When the vehicle requires additional power to operate, especially during periods of low wind or increased demand, the stored energy in the batteries can be seamlessly and instantaneously drawn upon. This feature ensures a consistent and uninterrupted power supply, even when wind conditions are suboptimal.

By incorporating a battery storage compartment into the wind-powered system, the tram or train can significantly reduce its reliance on external energy sources, enhancing both its energy efficiency and sustainability. This innovative solution not only maximizes the utilization of renewable wind energy but also contributes to the overall efficiency and reliability of electric trams and trains, ultimately fostering a more eco-friendly and dependable public transportation system.

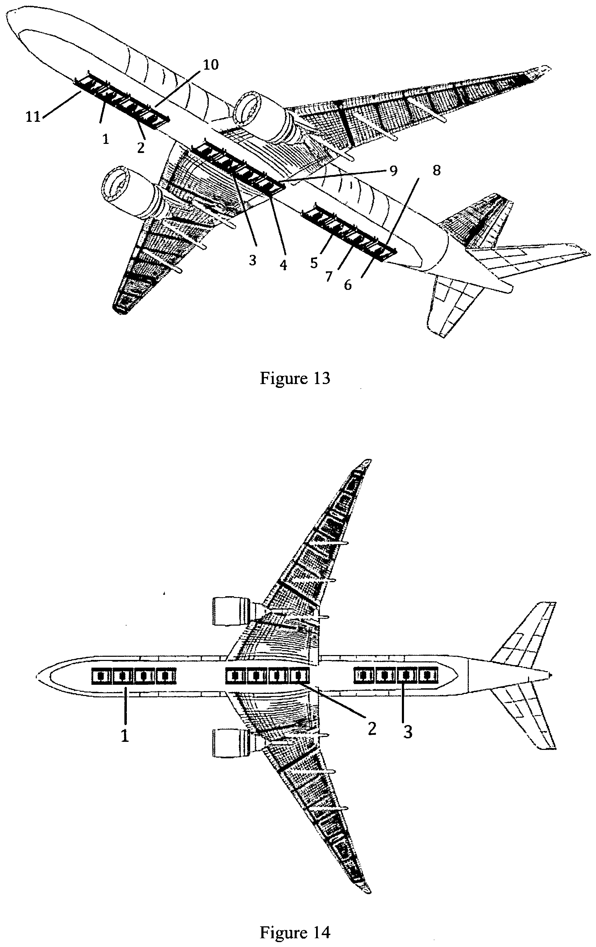

**In** **Figure 13****,** air travel and unmanned aerial vehicles (UAVs), commonly known as drones, are vital components of modern transportation and surveillance systems. The figure illustrates several dual turbines numbered from one to seven, along with four channels numbered from eight to eleven. The configurations of the self-charging wind-powered system offer the flexibility to apply all three main layout configurations-top, beneath, and channels-to airplanes and drones. This adaptability allows us to cater to a variety of designs and operational needs.

Beneath Layout: Due to their distinct shapes, airplanes and drones often benefit from the beneath layout configuration. Placing turbines beneath the aircraft takes advantage of the vehicle's specific shape and aerodynamics. This layout optimizes wind energy capture while maintaining the aircraft's aerodynamic profile. The beneath layout is the preferred choice for many aircraft, ensuring minimal interference with their performance.

Beneath Layout: Airplanes and drones often favor the beneath layout due to their unique shapes and aerodynamic requirements. This configuration optimizes wind energy capture without compromising aerodynamic performance, making it the preferred choice for these aircraft. It offers the advantage of enhancing sustainability without sacrificing functionality.

Top and Channels Layouts: Airplanes and drones can also benefit from the top and channels layouts. The top layout allows for efficient wind energy capture during flight and is well-suited for current electric aircraft and drones with minimal integration modifications. For new designs, the choice of layout depends on the vehicle's specific shape and preferences. Additionally, the channels layout offers an alternative solution, enclosing turbines within channels containing generators. It is a viable choice for designs that prioritize an integrated and streamlined appearance while harnessing wind power efficiently.

The integration of wind power into airplanes and drones through multiple layout configurations exemplifies our commitment to revolutionizing aerial transportation and surveillance. These tailored solutions ensure efficient energy generation during flight, contributing to reduced environmental impact and prolonged mission durations. The flexibility in layout options allows us to adapt our technology to a wide range of aircraft, enhancing the sustainability of air travel and drone operations.

**In** **Figure 14****,** shows an airplane from a different angle, featuring several dual turbines and channels numbered from one to three.

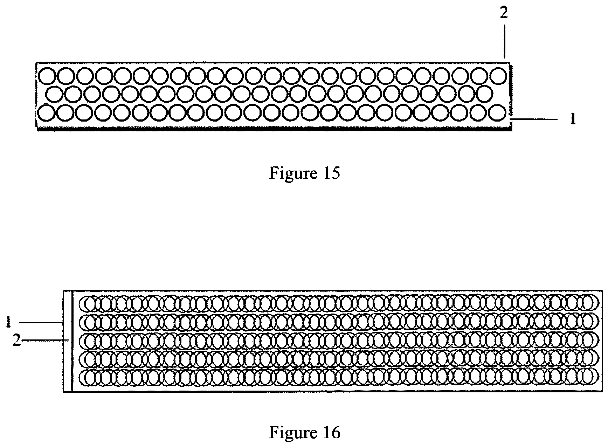

**In** **Figure 15****,** the two layers, numbered one and two, of the turbine rotation adjustment mechanism are designed to overlap. Each layer is equipped with circular holes of equal diameters. This overlapping configuration is typically maintained when the car is traveling at a steady speed or when wind conditions are normal. This configuration is applied to the front of both the top layout and channels layout to protect the generators from high-speed winds. **In** **Figure 16****,** the two layers, numbered one and two, of the turbine adjustment mechanism are shown in a partially overlapped configuration. This partial overlapping occurs in response to the acceleration of the vehicle's speed or an increase in wind flow due to adverse conditions.

This configuration is applied to the front of both the top layout and channels layout to protect the generators from high-speed winds.

## Claims

1. A self-charging wind-powered vehicle system comprising:
a wind turbine assembly configured for generating electricity from wind energy, a plurality of attachment means for securing said wind turbine assembly to various types of vehicles, an energy storage unit for storing electricity generated by said wind turbine assembly, and control means for optimizing the integration and operation of said wind turbine assembly with said vehicles.

2. A self-charge wind-powered vehicle system for cars with a dual wind turbine beneath layout.

3. A self-charge wind-powered vehicle system for cars with both beneath and channels layout configurations.

4. A self-charge wind-powered vehicle system for cars with a top layout configuration.

5. A self-charge wind-powered vehicle system for cars with beneath, channels and top layout configuration.

6. A self-charge wind-powered vehicle system for lorries and trucks, comprising a wind turbine assembly with dual wind turbines configured in both a beneath and channels layout.

7. A self-charge wind-powered vehicle system for trains and trams, comprising a wind turbine assembly with a top layout configuration.

8. A wind-powered system for electric trams and trains comprising a specialized battery storage compartment strategically positioned within the vehicle's structure. The battery storage compartment is configured to capture and store surplus electricity generated by wind turbines during periods of high wind efficiency, thereby providing a continuous and uninterrupted power supply to the vehicle, reducing reliance on external energy sources, and enhancing energy efficiency and sustainability in electric trams and trains.

9. A self-charge wind-powered vehicle system for airplanes and drones, comprising a wind turbine assembly with a beneath layout configuration.

10. Variable Pitch Blade Control; A wind turbine system for self-charging wind-powered vehicles, comprising variable pitch blades that automatically adjust their angles to optimize power generation at different vehicle speeds. The variable pitch blades are designed to adapt to varying wind conditions, enhancing electricity generation efficiency and turbine performance while maintaining system integrity.

11. Enclosed Box Design; An enclosed box design for wind turbines positioned atop vehicles in the 'Top Layout' configuration. The box enclosure features the capability to be fully closed, providing additional protection to the turbines during extreme wind conditions, debris, or potential hazards. This enclosed box design, combined with robust braking mechanisms, emphasizes safety and reliability in self-charging wind-powered vehicle systems, ensuring seamless operation across various conditions and prioritizing the well-being of both the equipment and vehicle occupants.

12. A self-charging wind-powered vehicle system comprising a Turbine Rotation Adjustment Mechanism, located at the front of the rectangular box enclosing the turbines in the 'Top Layout' configuration. This mechanism consists of two layers with circular holes to actively control airflow into the turbine system, regulating turbine rotation and power generation. During high-speed travel or strong winds, one layer can be partially moved to partially close the holes, moderating airflow and preventing excessive rotation for enhanced safety and performance. This innovative mechanism ensures adaptability and safety in varying wind conditions. This claim is also applicable to the 'Channels Layout' configuration featuring circular shapes.
